# EUROPEAN PATENT SPECIFICATION

(11) **EP 4 335 686 B1**
(45) Date of publication and mention of the grant of the patent: **23.07.2025**
(21) Application number: 23196133.5
(22) Date of filing: 08.09.2023
(51) Int. Cl.: B60L 53/53, B60L 53/10, B60L 53/62, B60L 53/63, B60L 53/67

(54) **FAST CHARGING SYSTEM FOR ELECTRIC VEHICLES WITH POWER DYNAMIC DISTRIBUTION FUNCTION**
SCHNELLLADESYSTEM FÜR ELEKTROFAHRZEUGE MIT DYNAMISCHER LEISTUNGSVERTEILUNGSFUNKTION
SYSTÈME DE CHARGE RAPIDE POUR VÉHICULES ÉLECTRIQUES AVEC FONCTION DE DISTRIBUTION DYNAMIQUE DE PUISSANCE

(30) Priority: 12.09.2022 CN 202211106412
(43) Date of publication of application: 13.03.2024
(73) Proprietor: Vilion (Shenzhen) New Energy Technology Co., Ltd., Shenzhen, Guangdong 518118 (CN)
(72) Inventor: SONG, Feng, Shenzhen, Guangdong 518118 (CN)
(74) Representative: Metida

(56) References cited:
- WO-A1-2021/217291
- US-A1- 2021 078 427
- US-A1- 2021 237 610
- US-A1- 2021 323 435
- US-A1- 2022 166 233

## Description

### Technical Field

The disclosure relates to the technical field of charging electric vehicles, and in particular relates to a fast charging system for electric vehicles, integrated with an energy storage system device and having a power dynamic distribution function.

### Brief Description of the Related Art

Electric vehicles are becoming more and more popular, but they have to confront with problems such as slow charging speed and large investment in charging facilities. These problems have become common problems restricting development of the electric vehicle industry.

The first problem is slow speed of charging. A DC charging device is installed in a charging station for electric vehicles. The charging power of the DC charging device usually cannot be adjusted once it is set up. However, as the replacement and renewal of the electric vehicles is going on, rated energy of batteries loaded on the electric vehicles is becoming greater and greater, and thus the required charging power is becoming larger and larger. This brings about the problems that in a case that the cruising range of the electric vehicle is increasing, the required charging time is also increasing, and the user has a feeling that the charging is getting slower and slower.

The second problem is large investment in the charging facilities. In order to meet the need of fast charging of electric vehicles, the DC charging device in the charging station for electric vehicles is usually set with a higher power. On the one hand, this leads to a large investment in a single high-power DC charging device. On the other hand, there are few working conditions upon actually charging that several electric vehicles are charging with a full power at the same time. So it is uneconomical to arrange high-power DC charging devices in all the stations; at the same time, the demand for distribution network capacity required by multiple high-power DC charging devices is also high; and, the actual charging load of electric vehicles in the charging station for electric vehicles has a characteristic of intermittent charging. When the distribution network is arranged according to the maximum installed capacity, there is an obvious problem of low resource utilization, which is a waste of investment.

WO 2021/217291 A1 provides a power supply and distribution system which includes at least one non-isolated AC/DC converter unit, an MV DC bus and multiple isolated DC/DC converter units, and the at least one non-isolated AC/DC converter unit is connected between an MV AC grid and the MV DC bus, and is configured to convert an input MV AC voltage to an output MV DC voltage, wherein the output MV DC voltage is fed into the MV DC bus, the multiple isolated DC/DC converter units are connected to the MV DC bus in parallel via MV class cables, and are configured to convert a voltage level from the MV DC bus to a charging voltage level. The power supply and distribution system can be used for charging the EVs.

US 2021/237610 A1 discloses an intelligent electric-vehicle charging station. The charging station includes at least one charger. Each charger includes at least one power conversion unit and at least one charging terminal. Each power conversion unit includes an alternating-current power distribution module, a plurality of rectification modules, a switch matrix and a power controller. The alternating-current power distribution module supplies power to each power conversion unit and the at least one charging terminal. The rectification modules are divided into a plurality of groups of modules. The plurality of groups of modules is controlled, through the switch matrix, to be connected to a plurality of direct-current output circuits. Each direct-current output circuit is connected to one charging terminal. The switch matrix switches each group of modules in the plurality of direct-current output circuits according to a control instruction of the power controller.

US 2022/166233 A1 discloses an electric vehicle charging depot which comprises a direct current (DC) bus configured to receive DC power from one or more power sources, the one or more power sources at least including a public transit light rail and/or subway power source; at least one electric vehicle charging stall connected to the DC bus and configured to charge an electric vehicle load; and at least one control module configured to monitor and control power flow from the DC bus to the at least one electric vehicle charging stall.

US 2021/323435 A1 discloses a smart parking lot system for charging electric vehicles (EVs) which includes a charger unit, a switching unit, an interface unit, and a control unit. The charger unit includes m chargers, the switching unit includes matrix switch elements S(i,j) configured to switch a connection between an i-th input port and a j-th output port according to a control signal specifying an address (i, j) and a switching state. An interface unit includes n interface ports to be connected with EVs parked for charging. Each of the m chargers is connected with one of m input ports of the matrix switch, respectively. Each of the n interface ports is connected with one of n output ports of the matrix switch, respectively. The control unit is configured to provide for the EV connected with an interface port, accessibilities to at least two chargers with different output power levels, when available.

US 2021/078427 A1 discloses an energy storage device charging system applied to a solid state transformer structure which is coupled to a power grid and charges a plurality of energy storage devices, or feeds power back to the power grid from the energy storage devices. The charging system includes a conversion module, a bus path, a charging module, and a control unit. A total power conversion capacity of the conversion module is less than a total charging power capacity of the charging module. The control unit respectively allocates a plurality of demand power capacities of the charging units according to a power conversion upper limit value of the total power conversion capacity.

Therefore, compromise should be made between the investment cost of the charging system for electric vehicles and the charging speed of the electric vehicles. It is very necessary to propose a fast charging system that meets both the economic requirements and the needs of the user experience.

### Summary of the Disclosure

The technical problem to be solved in this disclosure is to overcome the above-mentioned defects in the prior art, provide a fast charging system for electric vehicles with a dynamic power distribution function, thereby realizing the deployment of each DC charging device to each charging terminal according to the demand, and realizing dynamic adjustment of the charging power.

The present disclosure provides a fast charging system for electric vehicles with power dynamic distribution function, as defined in the appended set of claims.

A fast charging system for electric vehicles with power dynamic distribution function, including a rectifying device, an energy storage system device, a DC (direct current) charging device, a charging terminal, a DC bus, a bus bar, a gating switch device, a charging coordination controller and an energy management device;
the number of the charging terminal is two or more, the number of the gating switch device and the number of the DC charging device are the same as the number of the charging terminal;
an input end of the charging terminal is connected with an output end of the gating switch device, and an output end of the charging terminal is a charging port connected with the electric vehicle;
an input end of the DC charging device, an output end of the rectifying device and an output end of the energy storage system device are connected with the DC bus in parallel, and an input end of the rectifying device is connected with municipal mains power;
the energy management device is respectively connected with the DC charging device, the energy storage system device, the rectifying device, and the charging coordination controller through communication signals;
the charging coordination controller is respectively connected with the charging terminal and the gating switch device through communication signals, and the charging coordination controller controls the gating switch device to perform closing and opening operations of each switch to realize the power dynamic distribution function of the fast charging system for electric vehicles;
the energy management device receives information of the energy storage system device and information of the rectifying device, calculates maximum charging power P_max available for the fast charging system for electric vehicles, and sends information of maximum charging power P_max available for the fast charging system for electric vehicles to the charging coordination controller; and
the charging coordination controller determines current target charging power P_ev_target of the charging terminal according to information of the gating switch device, preset charging service strategy and information of maximum charging power P_max available for the fast charging system for electric vehicles, and satisfies P_ev_target≤P_max; and the charging coordination controller receives a charging power request P_ev_req sent by the charging terminal, and obtains actual charging power P_ev_use of the charging terminal, where P_ev_use is minimum value of P_ev_req and P_ev_target, and P_ev_use=min(P_ev_req, P_ev_target).

Each gating switch device in the gating switch devices includes N switches (N is a natural number greater than or equal to 3), the number of bus in the bus bar is (N-2); among the N switches, one end of the first switch K1 is connected with the first bus L1 in the bus bar, one end of the second switch K2 is connected with the second bus L2 in the bus bar, and one end of the third switch K3 is connected with the third bus L3 in the bus bar, and one end of the (N-2)^{th} switch K(N-2) is connected with the (N-2)^{th} bus L (N-2) in the bus bar, one end of the (N-1)^{th} switch K(N-1) is connected with an output end of the DC charging device, one end of the N^{th} switch KN is connected with an input end of the charging terminal, and the other ends of the first switch, the second switch, the third switch, the (N-2)^{th} switch, the (N-1)^{th} switch, and the N^{th} switch are connected in parallel.

Each gating switch device includes N switches, quantity N=int (P_terminal_max/P_charger)+1, where P_terminal_max is the maximum allowable charging power of the charging terminal, P_charger is rated power of a single DC charging device, and int means taking an integer.

Secondary power supply of the DC charging device adopts a method of taking electrical power from the DC bus, and a built-in DC-to-DC auxiliary power supply module; the secondary power supply of the energy storage system device adopts two circuits of power sources, one of which uses a DC-to-DC auxiliary power module to directly take electrical power from the DC bus for input, and an output thereof is connected to a secondary power supply interface of the energy storage system device, and the other one of which uses a battery power supply, and an output circuit of the battery power supply is connected to the secondary power supply interface of the energy storage system device; the secondary power supply of the energy management device, the gating switch device, and the charging coordination controller adopts a method of taking electrical power from the DC bus, and is provided with the DC to DC auxiliary power supply with an input end thereof connected with the DC bus, and an output end thereof connected with secondary power supply interface of the energy management device, the gating switch device, and the charging coordination controller.

The rectifying device includes an AC power distribution module and several AC/DC modules, an input end of the AC power distribution module is connected with the municipal mains power, and an output end of the AC power distribution module is connected with the input end of the AC/DC module, an output end of the AC/DC module is connected with the DC bus; the energy storage system device includes an energy storage battery cluster and a battery management system (BMS), and the energy storage battery cluster is connected with the DC bus.

The fast charging system for electric vehicles is performed in a charging sequence including:
Step_1, the energy management device receives information of the energy storage system device and information of the rectifying device, and calculates maximum charging power P_max available for the fast charging system for electric vehicles and sends the information of maximum charging power P_max available for the fast charging system for electric vehicles to the charging coordination controller;
Step_2, after the output end of the charging terminal is connected with the charging port of the electric vehicle, the charging coordination controller determines the current target charging power P_ev_target of the charging terminal on the basis of information of the gating switch device, the preset charging service strategy and the information of the maximum charging power P_max information available for the fast charging system for electric vehicles, and satisfies P_ev_target≤P_max; and the charging coordination controller receives the charging power request P_ev_req sent by the charging terminal, obtains the actual charging power P_ev_use of the charging terminal, where P_ev_use takes the minimum value of P_ev_req and P_ev_target, that is, P_ev_use=min(P_ev_req, P_ev_target);
Step_3, the charging coordinating controller controls the gating switch device to perform closing and opening operations of each switch, after the gating switching device is correctly executed, the charging coordinating controller requests the energy management device to control the corresponding DC charging device to start operation; and
Step_4, the charging coordination controller informs the charging power to the charging terminal and starts charging; during the charging process, if the electric vehicle corresponding to someone of the charging terminals is fully charged, the energy management device first controls all the DC charging devices that provide electric energy to this charging terminal to stop running, and then the charging coordination controller controls the corresponding gating switch device to perform the corresponding switch disconnection operation;
after that, cycling from Step_1 to Step_4, and restarting the idle DC charging device to charge the electric vehicles corresponding to other charging terminals.

The fast charging system for electric vehicles can provide electric energy from the energy storage system device to charge the electric vehicle when the mains power is cut off, so as to realize the emergency charging function.

Compared with the prior art, a fast charging system for electric vehicles with a dynamic power distribution function according to the present disclosure has the following advantages and beneficial implementation effects.
(1) it is beneficial to fast charging and improve customer experience.
   Since the present disclosure can deploy any DC charging device to any charging terminal, use the charging coordination controller to control the gating switch device to perform closing and opening operations of each switch to realize the power dynamic distribution function of the fast charging system for electric vehicles, the charging terminal can realize sharing of multiple groups of DC charging devices to achieve maximum charging power to charge electric vehicles. At the same time, it can also flexibly schedule and allocate the charging power of each charging terminal according to the preset charging service strategy (for example, different customer service levels correspond to different charging speeds and different customer service needs).
(2) it is beneficial to reduce costs and improve utilization.
   The present disclosure does not need to set up a high-power DC charging device, nor does it need to configure a large distribution network capacity, so the investment cost of the charging system can be greatly reduced; moreover, the high-power fast charging of the present disclosure is achieved by sharing multiple groups of DC charging devices. Therefore, the power redundancy of the DC charging device is reduced to a certain extent, which is beneficial to improve the utilization rate of the charging facility.
(3) it has the functions of black start and emergency charging.

The present disclosure is equipped with an energy storage system device, and a secondary power supply mode of, a DC charging device, an energy storage system device, an energy management device, a gating switch device, and a charging coordination controller, so that the fast charging system of the present disclosure has the function of black start, and can meet the needs of emergency charging of electric vehicles.

### Brief Description of the Drawings:

Fig. 1 is a connection schematic diagram of a primary electrical structure of a fast charging system for electric vehicles according to an embodiment of the present disclosure.
Fig. 2 is a schematic diagram of a communication connection of a fast charging system for electric vehicles according to an embodiment of the present disclosure.
Fig. 3 is a schematic diagram of the connection between a gating switch device and a bus bar of a fast charging system for electric vehicles according to an embodiment of the present disclosure.
Fig. 4 is a schematic diagram of a secondary power supply of a fast charging system for electric vehicles according to an embodiment of the present disclosure.

### Detailed Description of the Preferred Embodiment

The specific implementations of the present disclosure will be further described in detail below in conjunction with the accompanying drawings.

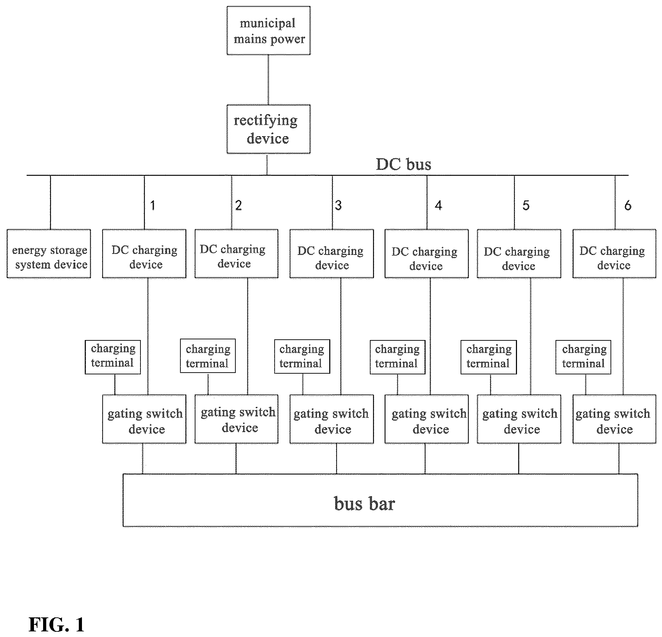

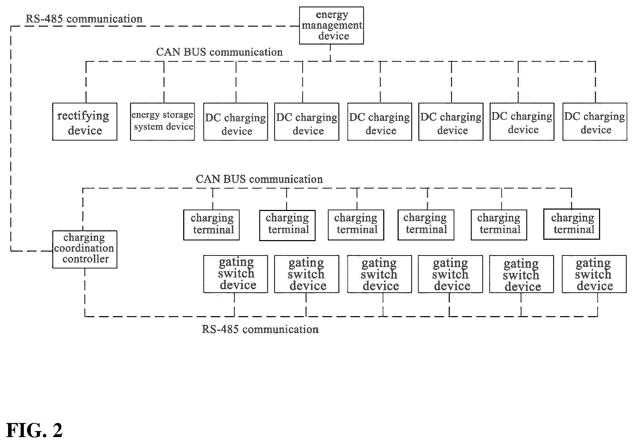

According to an embodiment of the present disclosure, a fast charging system for electric vehicles with a dynamic power distribution function is provided herein. As shown in Fig. 1 and Fig. 2, the fast charging system for electric vehicles includes a rectifying device, an energy storage system device, DC charging devices, charging terminals, a DC bus, a bus bar, gating switch devices, a charging coordinating controller and an energy management device.

In this embodiment, there are 6 charging terminals, 6 gating switch devices, and 6 DC charging devices, and a total of 6 charging positions, which can meet the requirement of charging 6 electric vehicles at the same time. Each charging position corresponds to one charging terminal, one gating switch device, and one charging terminal, that is, the first charging position corresponds to the first DC charging device, the first gating switch device, and the first charging terminal; the second charging position corresponds to the second DC charging device, the second gating switch device, and the second charging terminal; the third charging position corresponds to the third DC charging device, the third gating switch device, and the third charging terminal; the fourth charging position corresponds to the fourth DC charging device, the fourth gating switch device, and the fourth charging terminal; the fifth charging position corresponds to the fifth DC charging device, the fifth gating switch device, and the fifth charging terminal; and the sixth charging position corresponds to the sixth DC charging device , the sixth gating switch device, and the sixth charging terminal.

The maximum allowable charging power P_terminal_max of each charging terminal in this embodiment is 480kW, the rated power P_charger of each DC charging device is 120kW; the input of the rectifying device is AC 380V, the output thereof is DC 590V~820V, and the total charging power is 240kW; the rated energy of the energy storage system device is 430kWh, the working voltage range is 590V~820V, and the maximum discharging power of the energy storage system device is 660kW.

The input end of the charging terminal of each charging position is connected to the output end of the gating switch device (for example, the input end of the first charging terminal is connected to the output end of the first gating switch device), and the output end of the charging terminal is a charging port connected to the electric vehicle.

The input end of the DC charging device, the output end of the rectifying device and the output end of the energy storage system device are connected to the DC bus in parallel, and the input end of the rectifying device is connected to the municipal mains power.

The energy management device is respectively connected with the DC charging device, the energy storage system device, the rectifying device, and the charging coordination controller via communication signals. In this embodiment, the energy management device is connected with the DC charging device, the energy storage system device, and the rectifying device through CAN BUS communication signal; and the energy management device is connected with the charging coordination controller through RS-485 communication signal.

The charging coordination controller is respectively connected with the charging terminal and the gating switch device via communication signals. The charging coordination controller realizes the power dynamic distribution function of the fast charging system for electric vehicles by controlling the gating switch device to perform closing and opening operations of each switch. In this embodiment, the charging coordination controller is connected with the charging terminal through CAN BUS communication signal; and the charging coordination controller is connected with the gating switch device through RS-485 communication signal.

The energy management device receives the information of the energy storage system device and the information of the rectifying device, calculates the maximum charging power P_max available for the fast charging system for electric vehicles and sends the information to the charging coordination controller. The theoretical maximum charging power P_max of this embodiment is 900kW (the charging power of the rectifying device + maximum discharge power of the energy storage system device = 240kW+660kW=900kW).

The charging coordination controller determines the current target charging power P_ev_target of the charging terminal according to the information of the gating switch device, a preset charging service strategy and information of the maximum charging power P_max available for the fast charging system for electric vehicles, and satisfies P_ev_target≤P_max; and the charging coordination controller receives the charging power request P_ev_req sent by the charging terminal, and obtains the actual charging power P_ev_use of the charging terminal, where P_ev_use takes the minimum value of P_ev_req and P_ev_target, that is, P_ev_use=min(P_ev_req, P_ev_target).

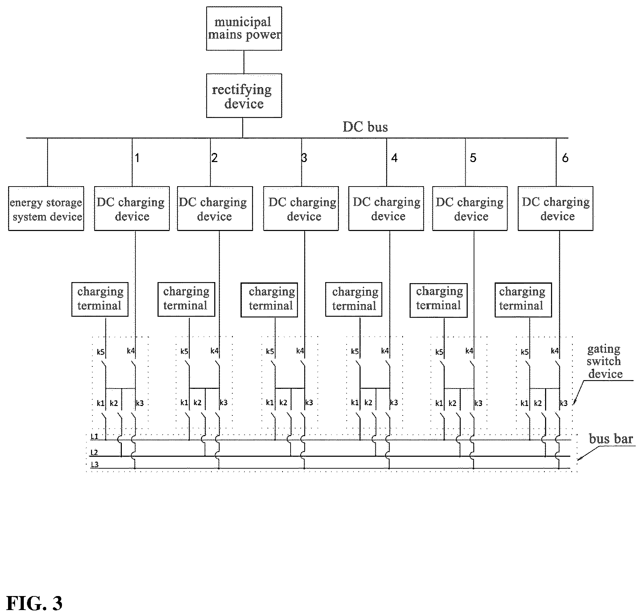

It can be seen from Fig. 3 that each gating switch device in this embodiment is provided with 5 switches, and the number of switches in each gating switch device N=int(P_terminal_max/P_charger)+1=int(480/120)+1 =5, the number of bus in the bus bar is 3 (the number of bus in the bus bar = the number of switches in each gating switch device-2=5-2=3). The connection mode of the 5 switches in each gating switch device is as follows: one end of the first switch K1 is connected with the first bus L1 in the bus bar, one end of the second switch K2 is connected with the second bus L2 in the bus bar, and one end of the third switch K3 is connected with the third bus L3 in the bus bar, one end of the fourth switch K4 is connected with the output end of the DC charging device, one end of the fifth switch K5 is connected with the input end of the charging terminal, and the other ends of the first switch, the second switch, the third switch, the fourth switch and the fifth switch are connected in parallel.

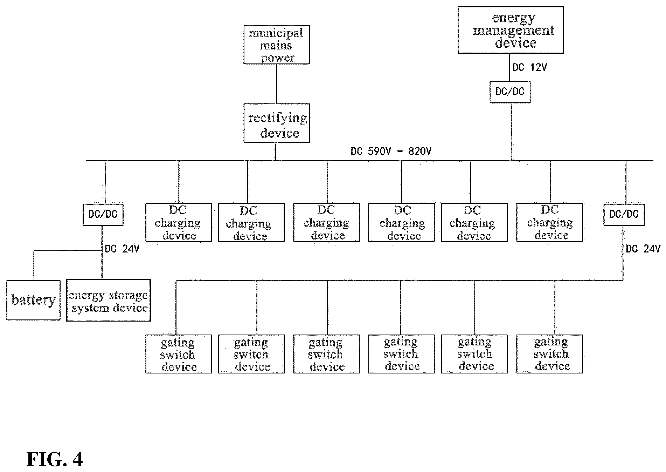

Fig. 4 is a schematic diagram of the secondary power supply of the fast charging system for electric vehicles according to the present embodiment. The secondary power supply of the DC charging device adopts the method of taking electrical power from the DC bus with a built-in DC-to-DC auxiliary power module. the secondary power supply of the energy storage system device adopts two circuits for power supply, one of which adopts the DC-to-DC auxiliary power module to take electrical power directly from the DC bus for input, and the output thereof is connected to the secondary power supply interface of the energy storage system device; the other one of which adopts a battery power supply, and an output circuit of the battery power supply is connected to the secondary power supply interface of the energy storage system device. In this embodiment, the secondary power supply voltage of the energy storage system device is DC 24V. The secondary power supply of the energy management device, the gating switch device, and the charging coordination controller adopts the method of taking electrical power from the DC bus, and is provided with the DC-to-DC auxiliary power supply with an input end thereof being connected with the DC bus, and an output end thereof being connected with the secondary power supply interface of the energy management device and the gating switch device. In this embodiment, the secondary power supply voltage of the energy management device is DC 12V. In this embodiment, the secondary power supply voltage of the gating switch device and the charging coordination controller is DC 24V.

In the case of a municipal mains power failure, the fast charging system for electric vehicles in this embodiment has a black start function. In the case of the municipal mains power failure, firstly, the secondary power supply of the energy storage system device is switched to the battery power supply, and the energy storage system device is connected with the DC bus and maintains a DC 590V~820V voltage; secondly, the secondary power supply of the DC charging device, the energy management device, the gating switch device, and the charging coordination controller adopts the method of taking electrical power from the DC bus, and the entire fast charging system for electric vehicles can still use the electric energy of the energy storage system device to charge the electric vehicle in an emergency.

In this embodiment, it is assumed that the first charging terminal, the fifth charging terminal, and the sixth charging terminal are connected with the first electric vehicle, the second electric vehicle, and the third electric vehicle in sequence; the first electric vehicle, the second electric vehicle and the third electric vehicle send out charging requests, and the charging coordination controller receives the charging requests P_ev_req from the first charging terminal, the fifth charging terminal, and the sixth charging terminal, all of which are 500kW. The first electric vehicle is firstly connected to the first charging terminal, and the electric vehicle connected to the first charging terminal enjoys a VIP level (enjoys a priority charging service). All the switches of all gating switch devices are kept disconnected before the charging terminal is connected with said electric vehicle. The charging process is as follows.

Step_1, the energy management device receives the information of the energy storage system device and the information of the rectifying device, calculates the maximum charging power P_max available for the current fast charging system for electric vehicles being 800kW, and sends the information to the charging coordination controller.

Step_2, after the output end of the first charging terminal is connected with the charging port of the first electric vehicle, the charging coordination controller determines the current target charging power P_ev_target (the data thereof is 480kW) of the first charging terminal, on the basis of the information of all gating switch devices, the preset charging service strategy and information about the maximum charging power P_max (the data thereof is 800kW) available for the fast charging system for electric vehicles, and satisfies P_ev_target≤P_max. The charging coordination controller receives the charging power request P_ev_req (the data thereof is 500kW) sent by the first charging terminal, and obtains the actual charging power P_ev_use (the data thereof is 480kW) of the first charging terminal, where P_ev_use is the minimum value of P_ev_req and P_ev_target, that is P_ev_use=min(P_ev_req, P_ev_target).

Step_3, the charging coordination controller controls the first gating switch device, the second gating switch device, the third gating switch device, and the fourth gating switch device to perform closing and opening operations of each switch, wherein all 5 switches of the first gating switch device are closed, the first switch K1 and the fourth switch K4 of the second gating switch device are closed, the second switch K2 and the fourth switch K4 of the third gating switch device are closed, the third switch K3 and the fourth switch K4 of the fourth gating switch device are closed, , and the other switches of the second gating switch device, the third gating switch device, and the fourth gating switch device are disconnected or open; all five switches of the fifth gating switch device are open, and all five switches of the sixth gating switch device are open; and after the gating switch device is performed correctly, the charging coordination controller requests the energy management device to control the first DC charging device, the second DC charging device, and the third DC charging device and the fourth DC charging device to start operation. The fast charging system for electric vehicles starts to rapidly charge the first electric vehicle at the power of 480kW.

Step_4, after the output end of the fifth charging terminal is connected with the charging port of the second electric vehicle, the charging coordination controller determines the current target charging power P_ev_target (the data thereof is 120kW) of the fifth charging terminal on the basis of the information of all gating switch devices, the preset charging service strategy and information about the maximum charging power P_max (the data thereof is 320kW) available for the fast charging system for electric vehicles, and satisfies P_ev_target≤P_max. The charging coordination controller receives the charging power request P_ev_req (the data thereof is 500kW) sent by the fifth charging terminal, and obtains the actual charging power P_ev_use (the data thereof is 120kW) of the fifth charging terminal, where P_ev_use is the minimum value of P_ev_req and P_ev_target, that is P_ev_use=min(P_ev_req, P_ev_target).

Step_5, the charging coordination controller controls the fifth gating switch device to perform closing and opening operations of each switch, wherein the fourth switch K4 and the fifth switch K5 of the fifth gating switch device are closed, and the other switches of the fifth gating switch device are open, and all five switches of the 6th strobe switch device are open. After the gating switch device is executed correctly, the charging coordination controller requests the energy management device to control the fifth DC charging device to start operation. The fast charging system for electric vehicles starts to charge the second electric vehicle at the power of 120kW.

Step_6, after the output end of the sixth charging terminal is connected with the charging port of the third electric vehicle, the charging coordination controller determines the current target charging power P_ev_target (the data thereof is 120kW) of the sixth charging terminal, on the basis of the information of all gating switch devices, the preset charging service strategy and the information of the maximum charging power P_max (the data thereof is 200kW) available for the fast charging system for electric vehicles, and satisfies P_ev_target≤P_max. The charging coordination controller receives the charging power request P_ev_req (the data thereof is 500kW) sent by the fifth charging terminal, and obtains the actual charging power P_ev_use (the data thereof is 120kW) of the sixth charging terminal, where P_ev_use is the minimum value of P_ev_req and P_ev_target, that is, P_ev_use=min(P_ev_req, P_ev_target).

Step_7, the charging coordination controller controls the sixth gating switch device to perform closing and opening operations of each switch, wherein the fourth switch K4 and the fifth switch K5 of the sixth gating switch device are closed, , and the other switches of the sixth gating switch device are open. After the gating switch device is executed correctly, the charging coordination controller requests the energy management device to control the sixth DC charging device to start operation. The fast charging system for electric vehicles starts to charge the third electric vehicle at the power of 120kW.

Step_8, when the first electric vehicle is fully charged before the second electric vehicle and the third electric vehicle, first the energy management device controls the first DC charging device, the second DC charging device, the third DC charging device, and the fourth DC charging device to stop operation; then, the charging coordination controller controls the remaining switches of the fifth gating switch device, that is, the first switch K1, the second switch K2, and the third switch K3 to be closed, and the charging coordination controller controls the first gating switch device to make the fourth switch K4 closed, the first switch K1 closed, the second switch K2 open, the third switch K3 open, and the fifth switch K5 open, and the charging coordination controller controls the second gating switch device to make the fourth switch K4 closed, the second switch K2 closed, the first switch K1 open, the third switch K3 open, and the fifth switch K5 open; the charging coordination controller controls the third gating switch device to make the fourth switch K4 closed, the third switch K3 closed, the first switch K1 open, the second switch K2 open, and the fifth switch K5 open; after the gating switch device is correctly executed, the charging coordination controller requests the energy management device to control the first DC charging device, the second DC charging device, and the third DC charging device to start operation. At this time, the fifth charging terminal of the fast charging system for electric vehicle switches from the initial 120kW charging power to 480kW charging power to quickly charge the second electric vehicle.

Compared with the prior art, a fast charging system for electric vehicles with a dynamic power distribution function according to the present disclosure has the following advantages and beneficial implementation effects.
(1) it is beneficial to fast charging and improve customer experience.
   Since the present disclosure can deploy any DC charging device to any charging terminal, use the charging coordination controller to control the gating switch device to perform closing and opening operations of each switch to realize the power dynamic distribution function of the fast charging system for electric vehicles, the charging terminal can realize sharing of multiple groups of DC charging devices to achieve maximum charging power to charge electric vehicles. At the same time, it can also flexibly schedule and allocate the charging power of each charging terminal according to the preset charging service strategy (for example, different customer service levels correspond to different charging speeds and different customer service needs).
(2) it is beneficial to reduce costs and improve utilization.
   The present disclosure does not need to set up a high-power DC charging device, nor does it need to configure a large distribution network capacity, and thus the investment cost of the charging system can be greatly reduced; moreover, the high-power fast charging of the present disclosure is achieved by sharing multiple groups of DC charging devices Therefore, the power redundancy of the DC charging device is reduced to a certain extent, which is beneficial to improve the utilization rate of the charging facility.
(3) it has the functions of black start and emergency charging.

The present disclosure is equipped with an energy storage system device, and a secondary power supply mode of a DC charging device, an energy storage system device, an energy management device, a gating switch device, and a charging coordination controller, so that the fast charging system of the present disclosure has the function of black start, and can meet the needs of emergency charging of electric vehicles.

## Claims

1. A fast charging system for electric vehicles with power dynamic distribution function, wherein
the fast charging system comprises a rectifying device, an energy storage system device, a DC charging device (1-6), a charging terminal, a DC bus, a bus bar, a gating switch device, a charging coordination controller and an energy management device;
wherein the number of the charging terminal is two or more, the number of the DC charging device (1-6) and the number of the gating switch device are the same as the number of the charging terminal; each gating switch device in the gating switch devices comprises N switches, N is a natural number greater than or equal to 3, quantity N=int (P_terminal_max/P_charger)+1, where P_terminal_max is the maximum allowable charging power of the charging terminal, P_charger is rated power of a single DC charging device (1-6), and int means taking an integer;
an input end of the charging terminal is connected with an output end of the gating switch device, and an output end of the charging terminal is a charging port connected with the electric vehicle;
an input end of the DC charging device (1-6), an output end of the rectifying device and an output end of the energy storage system device are connected with the DC bus in parallel, and an input end of the rectifying device is connected with municipal mains power;
the energy management device is respectively connected with the DC charging device (1-6), the energy storage system device, the rectifying device, and the charging coordination controller through communication signals;
the charging coordination controller is respectively connected with the charging terminal and the gating switch device through communication signals, and the charging coordination controller controls the gating switch device to perform closing and opening operations of each switch to realize the power dynamic distribution function of the fast charging system for electric vehicles;
the energy management device receives information of the energy storage system device and information of the rectifying device, calculates maximum charging power P_max available for the fast charging system for electric vehicles, and sends information of maximum charging power P_max available for the fast charging system for electric vehicles to the charging coordination controller; and
the charging coordination controller determines current target charging power P_ev_target of charging terminal according to information of the gating switch device, preset charging service strategy and information of maximum charging power P_max available in the fast charging system for electric vehicles, and satisfies P_ev_target ≤ P_max; the charging coordination controller receives a charging power request P_ev_req sent by the charging terminal, and obtains actual charging power P_ev_use of the charging terminal, where P_ev_use is minimum value of P_ev_req and P_ev_target, and P_ev_use=min(P_ev_req, P_ev_target);
wherein the number of bus in the bus bar is (N-2), where N is the number of switches included in the gating switch device; among the N switches, one end of the first switch K1 is connected with the first bus L1 in the bus bar, one end of the second switch K2 is connected with the second bus L2 in the bus bar, and one end of the third switch K3 is connected with the third bus L3 in the bus bar, and one end of the (N-2)^{th} switch K(N-2) is connected with the (N-2)^{th} bus L (N-2) in the bus bar, one end of the (N-1)^{th} switch K(N-1) is connected to an output end of the DC charging device (1-6), one end of the N^{th} switch KN is connected with an input end of the charging terminal, and the first switch, the second switch, the third switch, the (N-2)^{th} switch, the (N-1)^{th} switch, and the N^{th} switch are connected in parallel.

2. The fast charging system for electric vehicles with power dynamic distribution function according to claim 1, **characterized in that**
secondary power supply of the DC charging device (1-6) adopts a method of taking electrical power from the DC bus, and a built-in DC-to-DC auxiliary power supply module; the secondary power supply of the energy storage system device adopts two circuits of power sources, one of which uses a DC-to-DC auxiliary power module to directly take electrical power from the DC bus for input, and an output thereof is connected to a secondary power supply interface of the energy storage system device, and the other of which uses a battery power supply, and an output circuit of the battery power supply is connected to the secondary power supply interface of the energy storage system device; the secondary power supply of the energy management device, the gating switch device, and the charging coordination controller adopts a method of taking electrical power from the DC bus, and is provided with the DC to DC auxiliary power supply with an input end thereof connected with the DC bus, and an output end thereof connected with secondary power supply interface of the energy management device, the gating switch device, and the charging coordination controller.

3. The fast charging system for electric vehicles with power dynamic distribution function according to claim 1, **characterized in that**
the fast charging system for electric vehicles is performed in a charging sequence comprising:
Step_1, the energy management device receives information of the energy storage system device and information of the rectifying device, and calculates maximum charging power P_max available for the fast charging system for electric vehicles and sends information of maximum charging power P_max available for the fast charging system for electric vehicles to the charging coordination controller;
Step_2, after the output end of the charging terminal is connected with the charging port of the electric vehicle, the charging coordination controller determines the current target charging power P_ev_target of the charging terminal on a basis of information of the gating switch device, the preset charging service strategy and the information of the maximum charging power P_max information available for the fast charging system for electric vehicles, and satisfies P_ev_target≤P_max; and the charging coordination controller receives the charging power request P_ev_req sent by the charging terminal, and obtain actual charging power P_ev_use of the charging terminal, where P_ev_use is the minimum value of P_ev_req and P_ev_target, and P_ev_use=min(P_ev_req, P_ev_target);
Step_3, the charging coordinating controller controls the gating switch device to perform closing and opening operations of each switch, after the gating switching device is correctly executed, the charging coordinating controller requests the energy management device to control corresponding DC charging device (1-6) to start operation; and
Step_4, the charging coordination controller informs the charging power to the charging terminal and starts charging; during the charging process, if the electric vehicle corresponding to someone of the charging terminals is fully charged, the energy management device first controls all the DC charging devices (1-6) that provide electric energy to this charging terminal to stop running, and then the charging coordination controller controls the corresponding gating switch device to perform the corresponding switch disconnection operation;
after that, cycling from Step_1 to Step_4, and restarting idle DC charging device (1-6) to charge the electric vehicles corresponding to other charging terminals.

## Patentansprüche

1. Ein Schnellladesystem für Elektrofahrzeuge mit dynamischer Leistungsverteilungsfunktion, wobei das Schnellladesystem eine Gleichrichtervorrichtung, eine Energiespeichersystemvorrichtung, eine Gleichstromladevorrichtung (1-6), einen Ladeanschluss, einen Gleichstrombus, eine Sammelschiene, eine Torschaltvorrichtung, einen Ladekoordinationscontroller und eine Energieverwaltungsvorrichtung umfasst;
dabei:
die Anzahl der Ladeanschlüsse beträgt zwei oder mehr, die Anzahl der Gleichstromladegeräte (1-6) und die Anzahl der Torschaltungen entsprechen der Anzahl der Ladeanschlüsse. Jede Torschaltung besteht aus N Schaltern, wobei N eine natürliche Zahl größer oder gleich 3 ist und die Anzahl (P_Anschluss_max/P_Ladegerät) + 1 ist. Dabei ist P_Anschluss_max die maximal zulässige Ladeleistung des Ladeanschlusses, P_Ladegerät die Nennleistung eines einzelnen Gleichstromladegeräts (1-6) und int eine Ganzzahl.
ein Eingang des Ladeanschlusses ist mit einem Ausgang der Torschaltung verbunden, und ein Ausgang des Ladeanschlusses ist ein mit dem Elektrofahrzeug verbundener Ladeanschluss.
ein Eingang des Gleichstromladegeräts (1-6), ein Ausgang des Gleichrichters und ein Ausgang des Energiespeichersystems sind parallel mit dem Gleichstrombus verbunden, und ein Eingang des Gleichrichters ist mit dem öffentlichen Stromnetz verbunden.
das Energiemanagementgerät ist über Kommunikationssignale mit dem Gleichstromladegerät (1-6), dem Energiespeichersystem, dem Gleichrichter und dem Ladekoordinationscontroller verbunden.
der Ladekoordinationscontroller ist über Kommunikationssignale mit dem Ladeanschluss und dem Torschalter verbunden. Der Ladekoordinationscontroller steuert den Torschalter, um die Schließ- und Öffnungsvorgänge jedes Schalters auszuführen und so die dynamische Leistungsverteilung des Schnellladesystems für Elektrofahrzeuge zu realisieren.
das Energiemanagementgerät empfängt Informationen des Energiespeichersystems und des Gleichrichters, berechnet die maximal verfügbare Ladeleistung P_max für das Schnellladesystem für Elektrofahrzeuge und sendet diese Informationen an den Ladekoordinationscontroller.
der Ladekoordinationscontroller ermittelt die aktuelle Zielladeleistung P_ev_target des Ladeterminals anhand von Informationen des Torschaltergeräts, der voreingestellten Ladeservicestrategie und Informationen zur maximalen Ladeleistung P_max, die im Schnellladesystem für Elektrofahrzeuge verfügbar ist, und erfüllt die Bedingung P_ev_target ≤P_max; der Ladekoordinationscontroller empfängt eine vom Ladeterminal gesendete Ladeleistungsanforderung P_ev_req und ermittelt die tatsächliche Ladeleistung P_ev_use des Ladeterminals, wobei P_ev_use der Mindestwert von Pev_req und P_ev_target sowie P_ev_target ist);
wobei die Anzahl der Busse in der Sammelschiene (N-2) ist, wobei N die Anzahl der in der Torschaltungsvorrichtung enthaltenen Schalter ist; von den N Schaltern ist ein Ende des ersten Schalters **K1** mit dem ersten Bus L1 in der Sammelschiene verbunden, ein Ende des zweiten Schalters K2 ist mit dem zweiten Bus L2 in der Sammelschiene verbunden, ein Ende des dritten Schalters K3 ist mit dem dritten Bus L3 in der Sammelschiene verbunden, und ein Ende des Schalters K(N-2) ist mit dem (N-2)-ten Bus L(N-2) in der Sammelschiene verbunden, ein Ende des (N-1)-ten Schalters K(N-1) ist mit einem Ausgangsende der Gleichstromladevorrichtung (1-6) verbunden, ein Ende des N-ten Schalters KN ist mit einem Eingangsende des Ladeanschlusses verbunden, und der erste Schalter, der zweite Schalter, der dritte Schalter, der (N-2)-te Schalter, der (N-1)-te Schalter und der N-te Schalter sind parallel geschaltet.

2. Das Schnellladesystem für Elektrofahrzeuge mit dynamischer Leistungsverteilungsfunktion gemäß Anspruch 1, **dadurch gekennzeichnet, dass** die sekundäre Stromversorgung des Gleichstromladegeräts (1-6) elektrische Energie vom Gleichstrombus bezieht und über ein eingebautes DC/DC-Hilfsstromversorgungsmodul verfügt; die sekundäre Stromversorgung des Energiespeichersystems verfügt über zwei Stromkreise, von denen einer über ein DC/DC-Hilfsstrommodul Strom vom Gleichstrombus bezieht und dessen Ausgang mit einer sekundären Stromversorgungsschnittstelle des Energiespeichersystems verbunden ist; die andere über eine Batteriestromversorgung, deren Ausgangsstromkreis mit der sekundären Stromversorgungsschnittstelle des Energiespeichersystems verbunden ist; die sekundäre Stromversorgung des Energiemanagementgeräts, des Torschalters und des Ladekoordinationscontrollers elektrische Energie vom Gleichstrombus bezieht und über eine DC/DC-Hilfsstromversorgung verfügt, deren Eingang mit dem Gleichstrombus und deren Ausgang mit der sekundären Stromversorgungsschnittstelle des Energiemanagementgeräts und des Torschalters verbunden ist. der Ladekoordinationscontroller.

3. Das Schnellladesystem für Elektrofahrzeuge mit dynamischer Leistungsverteilungsfunktion nach Anspruch 1, **dadurch gekennzeichnet, dass** das Schnellladesystem für Elektrofahrzeuge in einer Ladesequenz ausgeführt wird, die umfasst:
Schritt_1: Das Energieverwaltungsgerät empfängt Informationen zum Energiespeichersystemgerät und Informationen zum Gleichrichtergerät und berechnet die für das Schnellladesystem für Elektrofahrzeuge verfügbare maximale Ladeleistung P_max und sendet Informationen zur für das Schnellladesystem für Elektrofahrzeuge verfügbaren maximalen Ladeleistung P_max an den Ladekoordinationscontroller.
Schritt_2: Nachdem das Ausgangsende des Ladeterminals mit dem Ladeanschluss des Elektrofahrzeugs verbunden wurde, ermittelt der Ladekoordinationscontroller die aktuelle Zielladeleistung P_ev_target des Ladeterminals auf Grundlage von Informationen des Torschaltergeräts, der voreingestellten Ladeservicestrategie und der Informationen zur maximalen Ladeleistung P_max, die für das Schnellladesystem für Elektrofahrzeuge verfügbar sind, und erfüllt die Bedingung P_ev_target≤P_max. und der Ladekoordinationscontroller empfängt die vom Ladeterminal gesendete Ladeleistungsanforderung P_ev_req und ermittelt die tatsächliche Ladeleistung P_ev_use des Ladeterminals, wobei P_ev_use der Mindestwert von P_ev_req und P_ev_target sowie P_ev_target ist);
Schritt_3: Der Ladekoordinationscontroller steuert die Torschaltungsvorrichtung, um Schließ- und Öffnungsvorgänge jedes Schalters durchzuführen. Nachdem die Torschaltungsvorrichtung korrekt ausgeführt wurde, fordert der Ladekoordinationscontroller das Energieverwaltungsgerät auf, die entsprechende Gleichstromladevorrichtung (1-6) zu steuern, um den Betrieb aufzunehmen; und
Schritt 4: Der Ladekoordinationscontroller teilt dem Ladeterminal die Ladeleistung mit und beginnt mit dem Laden. Wenn während des Ladevorgangs das Elektrofahrzeug einer der Ladestationen vollständig geladen ist, steuert die Energieverwaltungsvorrichtung zunächst den Betrieb aller Gleichstromladegeräte (1-6), die diese Ladestation mit elektrischer Energie versorgen, und steuert dann die Ladekoordinationssteuerung, um den entsprechenden Schalter zum Trennen des Stroms zu aktivieren.
Danach erfolgt ein Zyklus von Schritt 1 zu Schritt 4 und ein Neustart des im Leerlauf befindlichen Gleichstromladegeräts (1-6), um die Elektrofahrzeuge entsprechend den anderen Ladeterminals aufzuladen.

## Revendications

1. Un système de charge rapide pour véhicules électriques avec fonction de distribution dynamique de la puissance, où le système de charge rapide comprend un dispositif de redressement, un dispositif de système de stockage d'énergie, un dispositif de charge DC (1-6), un terminal de charge, un bus DC, une barre omnibus, un dispositif d'interrupteur de commande, un contrôleur de coordination de charge et un dispositif de gestion de l'énergie ; le nombre de terminaux de charge étant supérieur ou égal à deux, et le nombre de dispositifs de charge DC (1-6) et le nombre de dispositifs d'interrupteur de commande sont identiques au nombre de terminaux de charge ; chaque dispositif d'interrupteur de commande parmi les dispositifs d'interrupteur de commande comprend N interrupteurs, N étant un nombre naturel supérieur ou égal à 3, et la quantité N=int(P_terminal_max/P_charger)+1, où P_terminal_max est la puissance de charge maximale autorisée du terminal de charge, P_charger est la puissance nominale d'un seul dispositif de charge DC (1-6), et int désigne prendre un entier ;
une extrémité d'entrée du terminal de charge est connecté à une extrémité de sortie du dispositif d'interrupteur de commande, et une extrémité de sortie du terminal de charge est un port de charge connecté au véhicule électrique ;
une extrémité d'entrée du dispositif de charge DC (1-6), une extrémité de sortie du dispositif de redressement et une extrémité de sortie du dispositif de système de stockage d'énergie sont connectés en parallèle au bus DC, et une extrémité d'entrée du dispositif de redressement est connecté à l'alimentation du réseau électrique municipal ;
le dispositif de gestion de l'énergie est respectivement connecté au dispositif de charge DC (1-6), au dispositif de système de stockage d'énergie, au dispositif de redressement, et au contrôleur de coordination de charge via des signaux de communication ;
le contrôleur de coordination de charge est respectivement connecté au terminal de charge et au dispositif d'interrupteur de commande par des signaux de communication, et le contrôleur de coordination de charge commande le dispositif d'interrupteur de commande pour effectuer des opérations de fermeture et d'ouverture de chaque interrupteur afin de réaliser la fonction de distribution dynamique de puissance du système de charge rapide pour véhicules électriques ;
le dispositif de gestion de l'énergie reçoit les informations du dispositif de système de stockage d'énergie et les informations du dispositif de redressement, calcule la puissance de charge maximale P_max disponible pour le système de charge rapide pour véhicules électriques, et transmet les informations de la puissance de charge maximale P_max disponible pour le système de charge rapide au contrôleur de coordination de charge ; et
le contrôleur de coordination de charge détermine la puissance de charge cible actuelle P_ev_target du terminal de charge selon les informations du dispositif d'interrupteur de commande, la stratégie de service de charge prédéfinie et les informations de la puissance de charge maximale P_max disponible dans le système de charge rapide pour véhicules électriques, et satisfait P_ev_target ≤ P_max ; Le contrôleur de coordination de charge reçoit une demande de puissance de charge P_ev_req envoyée par le terminal de charge, et obtient la puissance de charge réelle P_ev_use du terminal de charge, où P_ev_use est la valeur minimale entre P_ev_req et P_ev_target, et P_ev_use = min(P_ev_req, P_ev_target) ;
où le nombre de bus dans la barre omnibus est (N-2), où N est le nombre d'interrupteurs compris dans le dispositif d'interrupteur de commande ; parmi les N interrupteurs, un côté du premier interrupteur K1 est connecté au premier bus L1 dans la barre omnibus, un côté du deuxième interrupteur K2 est connecté au deuxième bus L2 dans la barre omnibus, un côté du troisième interrupteur K3 est connecté au troisième bus L3 dans la barre omnibus, un côté de l'interrupteur (N-2) K(N-2) est connecté au bus (N-2) L(N-2) dans la barre omnibus, un côté de l'interrupteur (N-1) K(N-1) est connecté à une extrémité de sortie du dispositif de charge DC (1-6), un côté de l'interrupteur N K_N est connecté à une extrémité d'entrée du terminal de charge, et le premier interrupteur, le deuxième interrupteur, le troisième interrupteur, l'interrupteur (N-2), l'interrupteur (N-1) et l'interrupteur N sont connectés en parallèle.

2. Le système de charge rapide pour véhicules électriques avec fonction de distribution dynamique de puissance selon la revendication 1, **caractérisé en ce que**
l'alimentation électrique secondaire du dispositif de charge DC (1-6) adopte une méthode d'alimentation à partir du bus DC, et comprend un module d'alimentation auxiliaire DC/DC intégré ; l'alimentation électrique secondaire du dispositif de système de stockage d'énergie utilise deux circuits d'alimentation, dont l'un utilise un module d'alimentation auxiliaire DC/DC pour prélever directement l'énergie électrique du bus DC en entrée, et dont la sortie est connectée à une interface d'alimentation secondaire du dispositif de système de stockage d'énergie ; et l'autre utilise une alimentation par batterie, et le circuit de sortie de l'alimentation par batterie est connecté à l'interface d'alimentation secondaire du dispositif de système de stockage d'énergie ; l'alimentation électrique secondaire du dispositif de gestion de l'énergie, du dispositif d'interrupteur de commande et du contrôleur de coordination de charge adopte une méthode d'alimentation à partir du bus DC, et est équipée d'un module d'alimentation auxiliaire DC/DC dont l'entrée est connectée au bus DC, et la sortie est connectée à l'interface d'alimentation secondaire du dispositif de gestion de l'énergie, du dispositif d'interrupteur de commande et du contrôleur de coordination de charge.

3. Le système de charge rapide pour véhicules électriques avec fonction de distribution dynamique de puissance selon la revendication 1, **caractérisé en ce que**
le système de charge rapide pour véhicules électriques fonctionne selon une séquence de charge comprenant :
Étape 1 : le dispositif de gestion de l'énergie reçoit les informations du dispositif de système de stockage d'énergie et celles du dispositif de redressement, et calcule la puissance maximale de charge P_max disponible pour le système de charge rapide des véhicules électriques, et transmet les informations relatives à la puissance maximale de charge P_max disponible au contrôleur de coordination de charge ;
Étape 2 : après que l'extrémité de sortie de la borne de charge est connectée au port de charge du véhicule électrique, le contrôleur de coordination de charge détermine la puissance de charge cible actuelle P_ev_target de la borne de charge en se basant sur les informations du dispositif d'interrupteur de commande, la stratégie de service de charge prédéfinie et les informations de puissance maximale de charge P_max disponible pour le système de charge rapide des véhicules électriques, et s'assure que P_ev_target ≤ P_max ; et le contrôleur de coordination de charge reçoit la demande de puissance de charge P_ev_req envoyée par la borne de charge, et obtient la puissance de charge réelle P_ev_use de la borne de charge, où P_ev_use correspond à la valeur minimale entre P_ev_req et P_ev_target, soit P_ev_use = min(P_ev_req, P_ev_target) ;
Étape 3 : le contrôleur de coordination de charge commande le dispositif d'interrupteur de commande pour exécuter les opérations de fermeture et d'ouverture de chaque interrupteur, après l'exécution correcte du dispositif d'interrupteur de commande, le contrôleur de coordination de charge demande au dispositif de gestion de l'énergie de commander le démarrage du ou des dispositifs de charge CC (1-6) correspondants ;
Étape 4 : le contrôleur de coordination de charge informe la borne de charge de la puissance de charge et démarre la charge ; durant le processus de charge, si le véhicule électrique correspondant à l'une des bornes de charge est complètement chargé, e dispositif de gestion de l'énergie commande d'abord l'arrêt de tous les dispositifs de charge CC (1-6) alimentant cette borne de charge, puis le contrôleur de coordination de charge commande au dispositif d'interrupteur de commande correspondant d'exécuter l'opération de déconnexion des interrupteurs concernés ;
ensuite, la séquence reprend depuis l'étape 1 jusqu'à l'étape 4, et redémarre les dispositifs de charge CC (1-6) inactifs pour charger les véhicules électriques connectés aux autres bornes de charge.
